# EUROPEAN PATENT SPECIFICATION

(11) **EP 3 059 510 B1**
(45) Date of publication and mention of the grant of the patent: **11.04.2018**
(21) Application number: 16157025.4
(22) Date of filing: 23.02.2016
(51) Int. Cl.: F24F 3/14, F24F 11/00

(54) **APPARATUS AND METHOD TO DEHUMIDIFY A FLUID**
VORRICHTUNG UND VERFAHREN ZUM ENTFEUCHTEN EINER FLÜSSIGKEIT
APPAREIL ET PROCÉDÉ POUR DÉSHUMIDIFIER UN FLUIDE

(30) Priority: 23.02.2015 IT UB20150033
(43) Date of publication of application: 24.08.2016
(73) Proprietor: Vaccaro, Luigi, 33050 Porpetto (UD) (IT)
(72) Inventor: Vaccaro, Luigi, 33050 Porpetto (UD) (IT)
(74) Representative: Petraz, Gilberto Luigi

(56) References cited:
- WO-A1-2008/122605
- US-A1- 2012 266 615
- US-A1- 2014 345 307
- US-B1- 6 467 292

## Description

### FIELD OF THE INVENTION

The present invention concerns an apparatus and a method to dehumidify a fluid, generally air, although other types of gas are not excluded.

The dehumidification apparatus and method, according to the present invention are based on the technology of cooling - drying the fluid and can be used, for example, in the field of production of compressed air, to separate the humidity.

Hereafter in the description, reference will be made to air as the fluid to be dehumidified, although other applications to other types of fluid are not excluded.

### BACKGROUND OF THE INVENTION

Apparatuses to dehumidify air are known, which are based on the principle of cooling the air to separate the humidity contained therein by condensing it.

Such known dehumidification apparatuses comprise a heat exchanger, generally called evaporator, into which the air to be dehumidified is introduced, and a coolant to cool the air introduced. The air and the coolant are kept separate from each other in the heat exchanger by separate transit circuits.

In particular, the heat exchanger is connected both to an air heat exchange circuit, configured to introduce the air to be dehumidified into the heat exchanger, and also a coolant heat exchange circuit, configured to introduce the coolant into the heat exchanger.

The coolant heat exchange circuit defines a cooling circuit for the coolant.

The coolant heat exchange circuit comprises a compressor driven by a drive member, a condenser, located downstream of the compressor, and an expansion mean disposed between the exit of the condenser and the entrance to the heat exchanger.

The compressor is connected with its suction in correspondence with an exit aperture of the coolant from the heat exchanger and with its delivery to the entrance of the coolant to the condenser.

It is also known that during normal functioning, the thermal load conditions in the heat exchanger vary as a function at least of the flow rate of air in transit in the air heat exchange circuit, for example depending on the air required by user devices connected to the air heat exchange circuit.

For example, if in the air heat exchange circuit there is a reduction in the air flow rate, the flow rate of coolant in the coolant heat exchange circuit must be regulated to prevent the lower air temperature from going below 0°C and the consequent formation of ice in the heat exchanger.

To this purpose it is necessary to keep the temperature in the heat exchanger, air side, above 0°C, usually at about 2°C.

To evaluate the thermal load in the heat exchanger it is also known to associate with the coolant heat exchange circuit and/or the air heat exchange circuit detection devices configured to detect the temperature and/or pressure of the coolant and/or air in different points of the respective circuits.

The data detected by the detection devices are acquired by a command and control unit that regulates the cooling action of the coolant heat exchange circuit on the air.

A solution is known in which the command and control unit activates or deactivates the drive member of the compressor of the coolant heat exchange circuit depending on the thermal load detected. In this solution, the drive member is driven at a constant speed and is switched off when too low a thermal load is reached. This regulation mode of the thermal load, however, is disadvantageous because, with low loads, the compressor is continuously activated and reactivated, so that the pressure in the heat exchanger and the dew points also vary enormously.

To overcome this disadvantage, the most widespread solution is to install a by-pass valve connected between the delivery and the suction of the compressor. By opening the by-pass valve it is possible to keep the evaporator pressure/temperature almost constant, and suitable to prevent the formation of ice in the heat exchanger, i.e. to keep the temperature above 0°C. In this condition the coolant is constantly recirculated on the compressor instead of being sent to the evaporator, while the compressor stays always and in any case switched on. This solution causes a considerable energy consumption by the compressor.

A solution is also known in which the coolant heat exchange circuit is provided with a by-pass circuit connected between delivery and suction of the compressor and provided with a regulation member selectively commandable by the command and control unit to regulate the flow rate of coolant in transit through the by-pass circuit.

In particular, during normal functioning, the drive member is driven at a constant speed and if a reduction occurs in the thermal load in the heat exchanger, the command and control unit makes a regulation of the flow rate in transit in the by-pass circuit, acting on the regulation member.

In this way, part of the coolant is sent to the heat exchanger and part is recirculated in the compressor through the by-pass circuit.

The drive member is activated or de-activated by the command and control unit depending on the values of pressure and/or temperature detected, for example between the heat exchanger and the compressor of the coolant. When the pressure at suction of the compressor goes below a determinate value which for example corresponds to a temperature of the coolant below -15°C, the drive member is switched off.

However, this solution is disadvantageous because, even in low thermal load conditions, the compressor is driven with a constant speed of rotation, and therefore the energy consumption is considerable and the performance is not very stable/constant.

In order to try to overcome this disadvantage, a solution is also known in which speed regulation devices are associated with the drive member, generally an inverter, configured to regulate the drive speed of the drive member and therefore of the compressor. Examples of these solutions are described in documents US-B-6.467.292 and WO-A-2008/122605.

However, it is also known that speed regulation devices allow to reduce the speed of rotation of the drive member only up to a minimum speed value, below which it is not possible to go.

In this solution, when the heat exchanger is working with very low thermal loads, there is a possible repeated switching off/on commanded by the drive member, which not only causes high energy consumption but also instability in the coolant heat exchange circuit due to sudden variations in the parameters of pressure and temperature of the coolant.

In fact, it is known that after the drive member has been switched on, the compressor does not immediately start working at normal working conditions, but there is a transitory time during which there are variations in the parameters of pressure and temperature.

Furthermore, the plants described in US-B-6.467.292 and WO-A-2008/1226051, when there is no thermal load to the evaporator, or a low thermal load, are not very efficient, causing considerable energy losses and big fluctuations in the dew temperature every time the compressor is switched off or re-started.

One purpose of the present invention is to perfect an apparatus and a method to dehumidify a fluid to be dehumidified that allow to reduce energy consumption.

Another purpose of the present invention is to perfect an apparatus and a method to dehumidify a fluid that allow to stabilize the functioning conditions of the dehumidification apparatus.

Another purpose of the present invention is to perfect an apparatus and a method to dehumidify a fluid to be dehumidified that is simple and economical.

Another purpose of the present invention is to perfect an apparatus and a method to dehumidify a fluid that allow to increase the working life and/or reduce the maintenance interventions on components of the dehumidification apparatus according to the present invention.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, an apparatus to dehumidify a fluid to be dehumidified comprises a heat exchanger associated to an air heat exchange circuit and a coolant heat exchange circuit and configured to feed to the heat exchanger respectively the fluid and a coolant. The coolant heat exchange circuit is provided with a compressor, a condenser and an expansion member connected in series to each other and to the heat exchanger. A drive member is connected to the compressor in order to drive it. A device to regulate the speed is connected to the drive member and is configured to regulate the drive speed of the compressor.

The apparatus also comprises a command and control unit connected to the device to regulate the speed, and to detection devices provided to detect the thermal load of the heat exchanger.

In accordance with one aspect of the present invention, if the actuation speed of the compressor reaches the minimum speed, the command and control unit is configured to detect, by means of the detection devices, at least one functioning parameter of the fluid or the coolant, and if the at least one functioning parameter reaches a limit threshold value, indicating a further reduction in the thermal load, the command and control unit is configured to switch off the compressor.

According to another aspect of the present invention, the coolant heat exchange circuit is provided with a non-return valve interposed between the exit of the heat exchanger and the suction of the compressor and configured to prevent a reflux of the coolant from the compressor toward the heat exchanger at least when the compressor is switched off. Moreover the expansion member is configured to selectively intercept the flow in transit at least when the compressor is switched off. The combination of interception between the non-return valve and the expansion member allows to confine the heat energy in the evaporator avoiding a dissipation thereof in the remaining coolant heat exchange circuit.

The present invention also concerns a method to dehumidify a fluid to be dehumidified, which according to the present invention comprises:
- feeding the fluid to be dehumidified into a heat exchanger;
- circulating a coolant in a coolant heat exchange circuit during which the coolant is compressed by a compressor, condensed by a condenser and expanded by an expansion member;
- feeding the coolant into the heat exchanger to cool the fluid by means of heat exchange, and define the dehumidification of said fluid;
- regulating the actuation speed of the compressor between a value of minimum speed, greater than zero, and a value of maximum speed, the actuation speed being chosen as a function of the thermal load present in the heat exchanger and to prevent the formation of ice in the latter.

In accordance with one aspect of the present invention, the method provides that if the actuation speed of the compressor corresponds with the minimum actuation speed, it provides to detect at least one functioning parameter of the fluid or the coolant, and if the at least one functioning parameter reaches a limit threshold value, indicating a further reduction in the thermal load, the method provides to switch off the compressor.

This solution allows to obtain an apparatus to dehumidify a fluid in which the energy consumption is regulated precisely and in a proportional manner to the thermal load applied to the heat exchanger, allowing a considerable saving of energy.

Moreover, this solution allows to avoid heat stresses of the components which make up the apparatus and to increase the efficiency of dehumidification of the fluid.

In accordance with a possible variant of the present invention, when the switching-off of the compressor is commanded, the separation is also defined of the coolant heat exchange circuit in a first circuit branch, in which part of the coolant remains confined between the compressor and the condenser, and in a second circuit branch in which the remaining part of the coolant remains confined in the heat exchanger. This solution avoids a mixing of the coolant between the two branches if the compressor is switched off and reduces further losses of energy.

In particular, this separation allows to confine the coolant with greater cold load in the evaporator and therefore prevents losses of refrigerated energy already generated by the compression unit and therefore allows to further increase the efficiency of the apparatus.

Moreover, the accumulation of the cold load in the evaporator also allows to improve the stability of the dew temperature when the compressor works in on/off conditions, or switching on/off.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a schematic representation of a dehumidification apparatus according to the present invention;
- fig. 2 is a block diagram of at least part of the dehumidification method according to the present invention;
- figs. 3 and 4 each show graphs relating to trends of actuation speed of the compressor unit, the pressure of the coolant at exit from the evaporator and temperature of the coolant at entrance to the evaporator;
- fig. 5 shows a possible variant of fig. 1.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

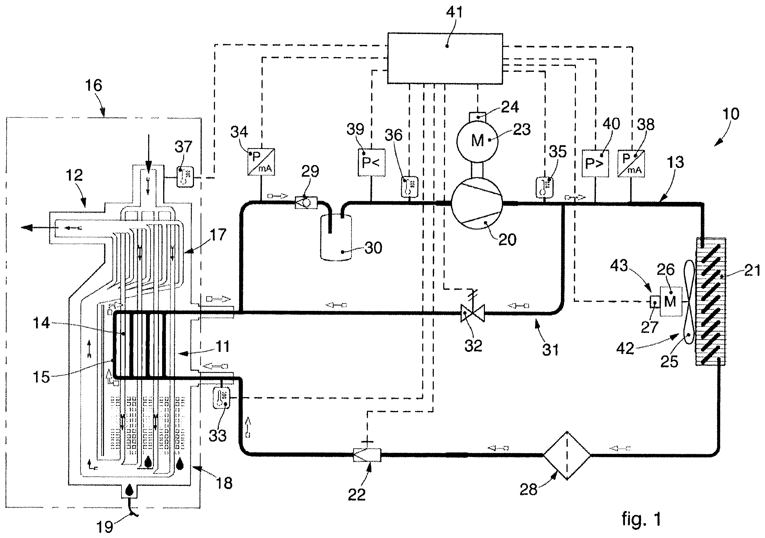

Fig. 1 shows a possible embodiment of a dehumidification apparatus of a fluid according to the present invention and indicated overall by the reference number 10.

The dehumidification apparatus 10 comprises at least a heat exchanger, denominated evaporator 11 hereafter, associated with an air heat exchange circuit 12 and a coolant heat exchange circuit 13, configured to feed the evaporator 11 respectively with air to be dehumidified and a coolant.

The evaporator 11 is provided with an air side circuit 14 and a coolant side circuit 15, connected respectively to the air heat exchange circuit 12 and the coolant heat exchange circuit 13 and kept reciprocally separate from each other, but still allowing a heat exchange between the coolant in transit and the air to be dehumidified.

According to fig. 1, the flow of air to be dehumidified in the air heat exchange circuit 12 is indicated by solid black arrows, while the flow of coolant in the coolant heat exchange circuit 13 is indicated by white arrows.

According to the variant shown in fig. 1, the evaporator 11 can in turn be part of a heat exchange unit 16 comprising as well as the evaporator 11 also an air/air heat exchange device, called economizer 17, and a condensation separator 18, connected in a known manner one in series with the other and in which the air to be dehumidified is made to pass.

The compressed air is introduced into the economizer 17. In the economizer 17 a first cooling of the compressed air occurs by means of heat exchange with the dehumidified air exiting from the condensation separator 18.

Subsequently the compressed air is introduced into the evaporator 11. In the evaporator 11 the compressed air is further cooled by the action of the coolant and taken to a temperature, also called dew temperature, suitable to condense the humidity contained therein, for example about 2°C.

Subsequently the compressed air is made to pass in the condensation separator 18 to separate the humidity contained in the air. The condensed liquid is discharged through a discharger 19 of the condensation separator 18.

The cold dehumidified air exiting from the condensation separator 18 is introduced into the economizer 17 to cool the compressed air entering into the latter, and therefore to heat up, for example to a temperature of about 8°C, lower than at entrance.

The coolant heat exchange circuit 13 defines a cooling circuit in which the coolant is compressed, condensed, expanded and vaporized, in substantially known modes.

The coolant heat exchange circuit 13 is therefore provided with a compressor 20, a condenser 21 and an expansion member in this case an expansion valve 22, connected in series with each other as in the order given.

The compressor 20 is configured to compress the coolant.

The compressor 20 can be of various types, for example alternative, rotary, with blades, screws, lobes, centrifuge or scroll.

The compressor 20 is driven by a drive member 23, generally an electric motor.

A speed regulation device 24 is associated with the compressor 20, and is configured to regulate the drive speed of the compressor 20.

Merely by way of example, the speed regulation device 24 can be configured to regulate the drive speed of the compressor 20 between about 15% and 100% of the maximum speed that the compressor 20 can reach.

According to one possible solution, the speed regulation device 24 can take the compressor 20 to a minimum speed value comprised between 5 revs/sec and about 30 revs/sec, preferably between about 15 revs/sec and about 25 revs/sec.

The speed regulation device 24 can comprise for example an inverter connected to the drive member 23 and configured to regulate the drive speed of the compressor 20.

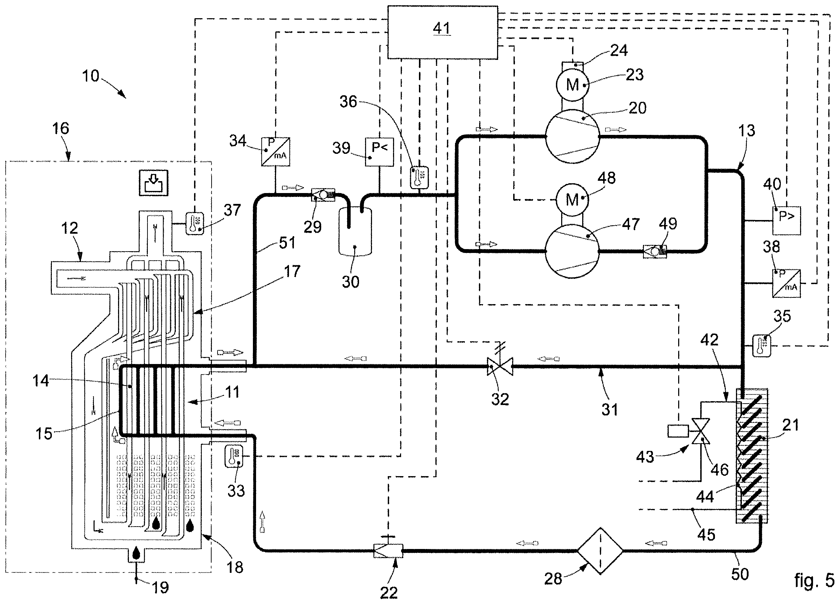

According to the variant described with reference to fig. 5, the compressor 20 is connected in parallel with at least one other compressor, in this case another compressor 47.

The other compressor 47 can be the type that can be regulated in speed as described above with reference to compressor 20.

According to the solution shown in fig. 5, the other compressor 47 is the fixed speed type, that is, driven directly by a motor 48 and is therefore configured to supply a constant cooling power.

During the drive of the other compressor 47, the speed of the compressor 20 is controlled to support over time the energy requirements of the evaporator 11. The compressor 20 is therefore de-activated only when the other compressor 47 is switched off because of a too limited thermal load in the evaporator 11.

According to the solution shown in fig. 5, the delivery of the other compressor 47 is provided with a non-return valve 49 configured to prevent the compressed fluid from flowing back from the compressor 20 through the other compressor 47.

The delivery of the compressor 20 is connected to the entrance of the condenser 21.

The condenser 21 is configured to cool the hot, high-pressure coolant arriving from the compressor 20 and to condense it to make it liquid.

The condenser 21 can be the air-cooled type (as shown in fig. 1) or water-cooled, or mixed type, i.e. air or water cooled.

According to one possible embodiment of the present invention, the condenser 21 comprises a cooling device 42 provided to cool the coolant in transit in the condenser 21, and to obtain the desired degree of condensation thereof.

A regulation member 43 is also associated with the cooling device 42, and is configured to continuously regulate the entity of cooling of the coolant.

Regulating the entity of cooling of the coolant enables a control of the condensation pressure of the coolant in the condenser 21. Because it is possible to control the condensation pressure, it is also possible to control the functioning modes of the compressor 20 to find an optimum point of the latter, and to optimize the overall performance of the dehumidification apparatus 10 and consequently the electric absorption.

The possibility of regulating the condensation pressure also allows to extend the working field of the compressor 20 both upward, when it is at its maximum drive speed, and also downward, when it is driven at its minimum actuation speed.

Furthermore, the possibility of regulating the condensation pressure continuously allows to control the dew point, making it more constant over time, and allows to stabilize the condensation pressure by increasing the reaction speed of the compressor 20, also when there are abrupt variations in the load.

According to the variant in fig. 1, the cooling device 42 comprises a ventilation device 25, driven by an electric motor 26, while the regulation member 43 comprises speed regulation devices 27 associated with the electric motor 26 and configured to regulate the drive speed of the ventilation device 25 and therefore its cooling action on the coolant.

According to a variant, shown merely by way of example in fig. 5, the cooling device 42 comprises a heat exchanger 44, or at least part of a heat exchanger, and a feed circuit 45, only partly shown in fig, 5, to feed a condensation fluid. According to the solution in fig. 5, moreover, the regulation member 43 comprises a regulation valve 46 configured to regulate the flow rate of the condensation fluid through the heat exchanger 44. The condensation fluid can be water or air, for example, or other liquid or gas.

According to some possible solutions, the heat exchanger 44 is substantially integrated and integrating part of the condenser 21.

According to one possible solution, the regulation valve 46 could be the self-controlled type, for example with a control probe, connected upstream of the condenser 21 and configured to detect the conditions of the coolant in transit toward the condenser 21. Depending on the condition detected by the control probe, the regulation valve 46 self-regulates itself to guarantee that a predefined condensation pressure is maintained.

Downstream of the condenser 21 the expansion valve 22 is provided, configured to regulate the flow rate of coolant in transit in the coolant heat exchange circuit 13 depending on the thermal load present in the evaporator 11.

According to another aspect of the present invention, the expansion valve 22 is configured to selectively intercept the flow of fluid in transit, at least when the compressor 20 is switched off.

In particular, the expansion valve 22 can be the thermostatic type, i.e. commanded by a thermostatic bulb located on the pipe exiting from the evaporator 11 and configured to detect for example the temperature of the coolant exiting from the evaporator 11 and to condition the rolling action of the expansion valve 22. The thermostatic expansion valve 22 allows to keep a constant functioning of the evaporator 11 depending on the variation in the thermal load, it allows to reach dew point correctly and to prevent the coolant, in its liquid state, from returning toward the compressor 20.

Some variants, not shown in the drawings, may provide that the expansion valve 22 is the electronically controlled type, for example by means of a thermometric and/or monometric probe associated with the exit from the evaporator 11, and is configured to detect the temperature and/or pressure of the coolant and to condition the rolling action of the expansion valve 22.

According to a possible variant, between the condenser 21 and the expansion valve 22 a filtering device 28 can be interposed, configured to filter the possible humidity that is generated in the coolant heat exchange circuit 13.

According to a possible variant, shown in fig. 1, the coolant heat exchange circuit 13 can also be provided with a non-return valve 29, interposed between the exit from the evaporator 11 and the suction of the compressor 20 and configured to prevent the coolant from flowing back from the compressor 20 to the evaporator 11.

According to a another variant, again shown in fig. 1, the coolant heat exchange circuit 13 can also be provided with a liquid separator 30, located upstream of the suction of the compressor 20 and configured to ensure that all the coolant passes to the gaseous state and to prevent the possible accidental introduction of a high quantity of coolant in the liquid state and/or lubricant oil into the suction of the compressor 20.

The coolant heat exchange circuit 13 is also provided with a by-pass circuit 31 connected between the delivery and the suction of the compressor 20.

In particular, the by-pass circuit 31 connects downstream of the evaporator 11, so that it is possible to control the evaporation pressure and hence the temperature in the evaporator, to keep it above the threshold of ice, without dispersing power directly to the evaporator 11.

When the thermal load in the evaporator 11 is low, the function of the by-pass circuit 31 is at least to control the flow rate of coolant toward the evaporator 11 and therefore to prevent the formation of ice. In particular, if the by-pass circuit 31 is active, part of the flow of coolant compressed by the compressor 20 is sent to the condenser 21 and then to the evaporator 11, while part of the flow of coolant is returned to the suction of the compressor 20 and therefore recirculated.

When the compressor 20 is started, the by-pass circuit 31 also has the function of regulating the pressure of the coolant between delivery and suction of the compressor 20, for example to make them equal and allow the latter to be started with reduced electric powers.

According to the variant shown in fig. 1, the by-pass circuit 31 is provided with a regulation member 32, selectively commandable to regulate the flow rate of the coolant in transit through the by-pass circuit 31.

According to one possible solution of the present invention, the regulation member 32 allows the coolant to pass only in the initial start-up step of the compressor 20 and subsequently during the normal functioning of the apparatus 10 it is configured to completely intercept said flow.

According to the variant shown in fig. 1, the by-pass circuit 31 is connected upstream of the non-return valve 29 and the liquid separator 30, in the case shown here in proximity to the exit of the evaporator 11.

According to the present invention, the dehumidification apparatus 10 comprises a plurality of detection devices associated with the air heat exchange circuit 12 and/or the coolant heat exchange circuit 13 and configured to detect functioning parameters of the dehumidification apparatus 10.

Merely by way of example, the detection devices can be configured to detect, in the coolant and/or in the air, at least one of either temperature, pressure, flow rate or a possible combination thereof, or the humidity of the air.

According to the solution shown in fig. 1, the detection devices comprise at least a first temperature sensor 33 installed in the coolant heat exchange circuit 13, at entrance to the evaporator 11 and configured to detect the temperature of the coolant at entrance to the evaporator 11. In particular, to prevent the formation of ice in the evaporator 11, the temperature of the coolant entering it can be more than 0°C, usually about 2°C-3°C and suitable to condense the humidity of the air in transit in the air side circuit 14. The temperature of the coolant entering the evaporator 11 also takes the name of dew point temperature.

According to possible variants, the detection devices can also comprise a second temperature sensor 35 and/or a third temperature sensor 36 associated respectively to the suction and delivery of the compressor 20.

According to another embodiment of the present invention the detection devices can comprise a fourth temperature sensor 37, associated with the entrance of the heat exchange unit 16 and configured to detect the temperature of the air to be dehumidified entering the heat exchange unit 16. The temperature data detected by the fourth temperature sensor 37 can indicate the thermal load to which at least the evaporator 11 is subjected.

According to the solution shown in fig. 1, the detection devices comprise at least a first pressure sensor 34 installed in the coolant heat exchange circuit 13, at exit from the evaporator 11 and configured to detect the pressure of the coolant exiting from the evaporator 11.

According to a possible variant, shown in fig. 1, the detection devices also comprise a second pressure sensor 38 associated with the coolant heat exchange circuit 13 downstream of the delivery of the compressor 20 and configured to detect the pressure of the coolant exiting from the compressor 20.

According to some possible solutions, shown in fig. 1, the coolant heat exchange circuit 13 also comprises pressure switches, respectively a low pressure switch 39 and a high pressure switch 40, located respectively upstream and downstream of the compressor 20 to supply activation/de-activation signals of the compressor 20 as a function of the pressure values detected.

According to the present invention, the dehumidification apparatus 10 also comprises a command and control unit 41 configured at least to detect the functioning parameters of the dehumidification apparatus 10 and to command the drive at least of the compressor 20.

The command and control unit 41 controls the functional processes, supplies a dialog interface for the operator and comprises an operator interface to manage the operating functions, to display the functional parameters of the plant, to signal alarms and to set parameters of the drying process.

In particular, the command and control unit 41 is connected to at least some of the detection devices described above to detect the data relating to at least one of the functioning parameters.

The command and control unit 41 is also connected to the speed regulation device 24 of the compressor 20 to control the drive speed thereof, as a function of the data detected.

The command and control unit 41 can also be connected to the speed regulation device 27 of the ventilation device 25, to control the drive speed thereof.

According to possible variants, at least one of the speed regulation devices 24 or 27 can itself integrate the function of the command and control unit 41, since it is possible to connect to the speed regulation devices 24, 27 the detection devices provided.

Hereafter we will describe the method to dehumidify a fluid to be dehumidified which comprises at least feeding the fluid to be dehumidified into the evaporator 11 and circulating a coolant in a coolant heat exchange circuit 13 to compress, condense and expand the coolant respectively by the compressor 20, the condenser 21 and the expansion valve 22.

In particular, the coolant is made to pass through the compressor 20 and reaches the condenser 21 at high pressure. Here the coolant is cooled, condenses and changes to the liquid state, at high pressure.

The flow of coolant to the evaporator 11 is controlled by the expansion valve 22. The fall in pressure resulting from the passage of the liquid coolant through the expansion valve 22 ensures the subsequent evaporation of the coolant at a defined temperature in the evaporator 11.

The coolant, which is in the liquid state and at low pressure, is fed into the evaporator 11 where it expands and evaporates. The low pressure of the coolant at exit from the evaporator 11 is again increased by the compressor 20, repeating the cycle described above.

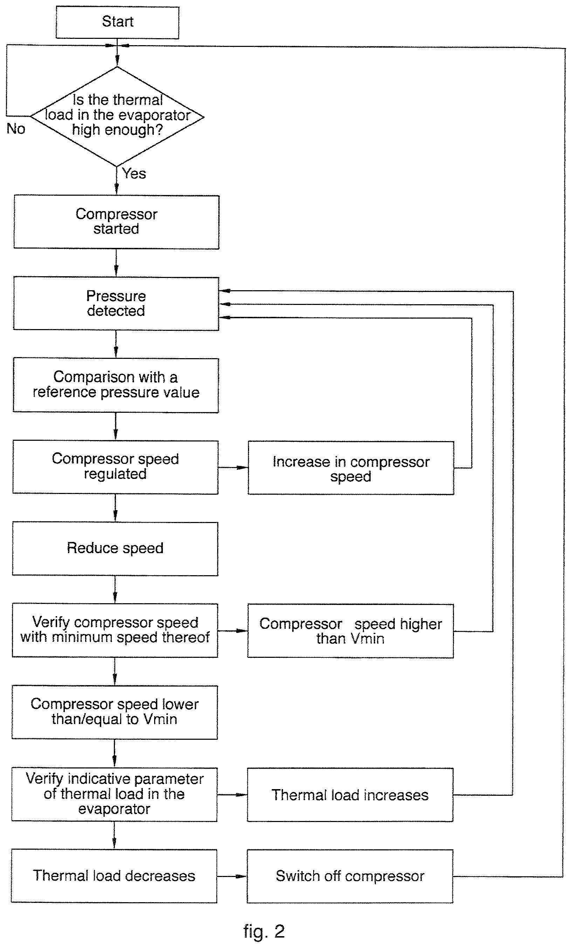

According to a possible variant, shown for example in fig. 2, the method comprises an initial step to evaluate the thermal load in the evaporator 11 to evaluate whether it is high enough to start the compressor 20 or not.

If it is, the method comprises a step of starting the compressor 20, during which the actuation speed is set to a value of start-up speed which, merely by way of example, can be about 40%-50% of the maximum actuation speed of the compressor 20.

It may be provided to keep the compressor 20 at this start-up speed for a predetermined period of time suitable to allow the correct circulation of the lubricating oil inside the coolant heat exchange circuit 13, for example about 3 minutes.

According to a possible variant, if the pressure at exit from the evaporator 11 decreases too much during the start-up step, for example because the thermal load in the evaporator 11 is insufficient, the command and control unit 41 activates the regulation member 32 of the by-pass circuit 31 determining an increase in the pressure at exit from the evaporator 11 and preventing the formation of ice in the latter.

According to a possible variant, following the start-up step of the compressor 20, the command and control unit 41 manages the functioning of the compressor 20, regulating its actuation speed as a function of the variations in the thermal load in the evaporator 11.

During normal functioning, the command and control unit 41 can make an automatic control of the thermal load according to a proportional, integrative and derivative logic, also known as PID logic.

The thermal load in the evaporator 11 can be defined by the flow rate of air that is introduced into the evaporator 11, and/or by the air introduction conditions, i.e. its temperature, humidity and/or pressure.

During the functioning of the dehumidification apparatus 10, the command and control unit 41 constantly monitors the thermal load in the evaporator 11, evaluating at least one of:
- pressure of the coolant at exit from the evaporator 11, in this case with the first pressure sensor 34,
- pressure of the coolant entering the condenser 21, in this case with the second pressure sensor 38,
- temperature of the coolant entering the evaporator 11, in this case with the first temperature sensor 33.

According to fig. 2, the command and control unit 41 is configured to detect the pressure of the coolant at exit from the evaporator 11 and to compare it with a reference pressure value that corresponds to optimum functioning conditions of the evaporator 11 such as to prevent the formation of ice and to ensure an effective condensation action of the humidity in the air to be dehumidified.

Merely by way of example it can be provided that the actuation speed of the compressor 20 is commanded so that the pressure of the coolant at exit from the evaporator 11 remains confined inside a predetermined band located around the reference pressure.

The reference pressure is chosen as a function of the type of coolant used.

Merely by way of example, some examples of coolants that can be used are R407C, R134a, R410A, R290, R32, R717, R744.

Following the comparison between the pressure values, the speed of actuation of the compressor 20 is regulated so that the pressure of the coolant at exit from the evaporator 11 is kept substantially constant around the reference pressure value.

According to some solutions of the present invention, the actuation speed of the compressor 20 is regulated between a minimum speed value, more than zero, and a maximum speed value, as a function of the thermal load in the evaporator 11.

If the pressure of the coolant exiting from the evaporator 11 is increasing, this indicates an increase in the thermal load to the evaporator 11 and therefore the command and control unit 41 commands an increase in the actuation speed of the compressor 20.

If the pressure of the coolant exiting from the evaporator 11 is decreasing, this indicates a decrease in the thermal load to the evaporator 11 and therefore the command and control unit 41 commands a reduction in the actuation speed of the compressor 20.

Following every regulation action on the actuation speed of the compressor 20, the command and control unit 41 verifies whether the speed of the compressor 20 is equal to or less than a minimum speed value of the compressor 20.

According to one possible solution, the command and control unit 41 can set the drive of the compressor 20 at a minimum speed, if it detects a pressure and/or temperature parameter of the coolant below a limit value.

If the thermal load of the evaporator 11 is reduced, and takes the compressor 20 to function at an actuation speed equal to or less than the minimum speed, the command and control unit 41 detects at least one functioning parameter of the fluid to be dehumidified or of the coolant and, if the latter reaches a limit threshold value, indicating a further reduction in the thermal load in the evaporator 11, the command and control unit 41 commands the compressor 20 to switch off.

According to a possible variant, the switching-off of the compressor 20 is commanded when the temperature of the coolant entering the heat exchanger is less than or equal to 1 °C.

Following the switching off of the compressor 20, the command and control unit 41 keeps the thermal load in the evaporator 11 monitored, and commands the activation of the compressor 20 only when a minimum thermal load is re-established in the evaporator 11.

Merely by way of example, the compressor 20 can be activated for example if the pressure at exit from the evaporator 11 returns above a predetermined value.

During the control with low thermal load, the command and control unit 41 interrupts the automatic control, for example using PID technology, of the compressor 20 and adopts the control logic described above.

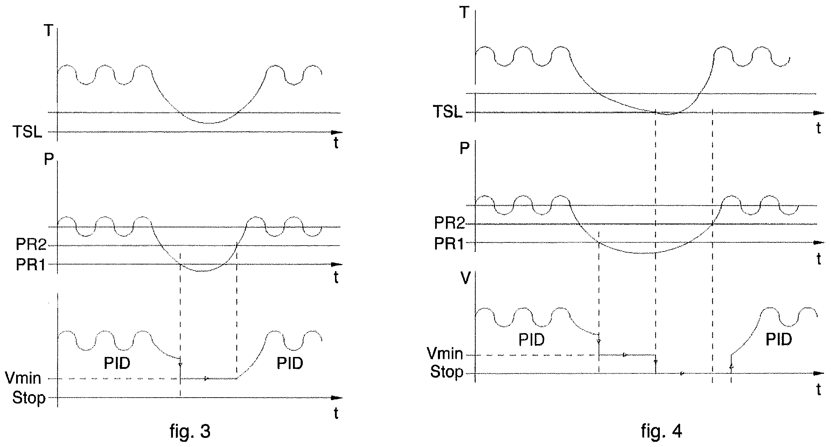

Figs. 3 and 4 show two examples of the control of the compressor 20 according to the present invention, if the latter is activated with an actuation speed substantially equal to the minimum speed.

In particular, both fig. 3 and fig. 4 show the developments of the actuation speed of the compressor 20, pressure of the coolant at exit from the evaporator 11 and temperature of the coolant entering the evaporator 11.

Both for fig. 3 and for fig. 4, if the pressure of the coolant at exit from the evaporator 11 goes below a reference value indicated by PR1, the command and control unit 41 sets an actuation speed of the compressor 20 substantially equal to the minimum speed Vmin.

In this condition, the command and control unit 41 detects the data relating to the thermal load in the evaporator 11 by measuring for example the temperature at entrance to the evaporator 11, and as a function of these data the cases shown in fig. 3 or fig. 4 can be verified.

Case 1 (fig. 3): the temperature at entrance to the evaporator 11 remains above a limit threshold value TSL. After the rotation speed has been set to the minimum speed value Vmin, the pressure of the coolant at exit from the evaporator 11 and the temperature at entrance to the evaporator 11 increase. This means that it is not necessary to switch off the compressor 20 because there is sufficient thermal load to the evaporator 11. When the pressure of the coolant at exit from the evaporator 11 stabilizes above another reference value PR2, the command and control unit 41 restarts the control in automatic PID mode.

Case 2 (fig. 4): the temperature at entrance to the evaporator 11 goes below the limit threshold value TSL. This means that the reduction in speed of the compressor 20 has not been enough to compensate for the reduction in the thermal load in the evaporator 11, and it is necessary to switch off the compressor 20 to prevent the formation of ice in the evaporator 11. The compressor 20 can be restarted when a thermal load is re-established in the evaporator 11, for example when pressure PR2 is reached.

According to a possible variant, when the compressor 20 is commanded to switch off, the command and control unit 41 can also command the complete closure of the expansion valve 22 and the regulation member 32. According to a possible variant, the expansion valve 22 could also close automatically, without needing an external command, when the compressor 20 is switched off, for example if a mechanical type expansion valve 22 is used.

In this way a first branch 50 of the coolant heat exchange circuit 13 is generated, which is comprised between the non-return valve 29 and the expansion valve 22 and which connects the compressor 20 and the condenser 21, in which the coolant compressed by the compressor 20 and cooled by the condenser 21 remains confined, and a second branch 51 of the coolant heat exchange circuit 13, which is comprised between the non-return valve 29 and the expansion valve 22, which connects the evaporator 11 and in which the coolant contained in the latter and which has been heated by the heat exchange with the evaporator 11 remains confined.

Furthermore, if the by-pass circuit 31 is also present, when the compressor 20 is switched off a consequent closure of the regulation member 32 can follow, to prevent any mixing whatsoever between the coolant in the first branch 50 and the coolant in the second branch 51.

This solution allows therefore to prevent energy losses of the apparatus 10 and to increase the efficiency thereof, both in terms of energy and in terms of performance, guaranteeing a stable dew temperature even at low loads, in work conditions at which the compressor works in cyclical mode with an on/off action.

Furthermore, the non-return valve 29, in combination with the expansion valve 22, allows to extend the switch off time of the compressor 20 and to prevent the immediate balancing of the high and low pressure in the coolant heat exchange circuit 13.

It is clear that modifications and/or additions of parts may be made to the dehumidification method and apparatus 10 as described heretofore, without departing from the field and scope of the present invention.

For example, according to a possible variant, the method also provides an action to control the ventilation devices 25 associated with the condenser 21. According to this embodiment, an action can be provided to control the speed of the ventilation devices 25 by the command and control unit 41, to keep the pressure at entrance to the condenser 21 and measured by the second pressure sensor 38 more or less constant.

Merely by way of example, the ventilation devices 25 are also controlled using PID control logic as described above. According to a possible variant, an action can also be provided to switch off the ventilation devices 25 when the compressor 20 is switched off.

According to the present invention, the ventilation device 25 could be commanded with an on/off control logic, for example by means of thermostatic or manostatic command devices.

It is also clear that, although the present invention has been described with reference to some specific examples, a person of skill in the art shall certainly be able to achieve many other equivalent forms of dehumidification method and apparatus 10, having the characteristics as set forth in the claims and hence all coming within the field of protection defined thereby.

## Claims

1. Apparatus to dehumidify a fluid to be dehumidified comprising a heat exchanger (11) associated to an air heat exchange circuit (12) and a coolant heat exchange circuit (13) and configured to feed to said heat exchanger (11) respectively said fluid and a coolant, said coolant heat exchange circuit (13) being provided with a compressor (20), a condenser (21) and an expansion member (22) connected in series to each other and to said heat exchanger (11), a drive member (23) being connected to said compressor (20) and a device to regulate the speed (24) being connected to said drive member (23) and configured to regulate the drive speed of said compressor (20), said apparatus comprising a command and control unit (41) connected to said device to regulate the speed (24), and to detection devices provided to detect the thermal load of said heat exchanger (11),
**characterized in that,** if the actuation speed of said compressor (20) reaches the minimum speed, said command and control unit (41) is configured to detect, by means of said detection devices, at least one functioning parameter of said fluid or said coolant, **in that** if said at least one functioning parameter reaches a limit threshold value, indicating a further reduction in the thermal load, said command and control unit (41) is configured to switch off said compressor (20), **in that** said coolant heat exchange circuit (13) is provided with a non-return valve (29) interposed between the exit of said heat exchanger (11) and the suction of said compressor (20) and configured to prevent a reflux of the coolant from the compressor (20) toward said heat exchanger (11) at least when said compressor (20) is switched off, **and in that** said expansion member (22) is configured to selectively intercept the flow in transit at least when said compressor (20) is switched off.

2. Apparatus as in claim 1, **characterized in that** said coolant heat exchange circuit (13) comprises a by-pass circuit (31) connected between the delivery and the suction of the compressor (20) and provided with a regulation member (32) connected to said command and control unit (41) and able to be selectively commanded to regulate or intercept the flow rate of coolant passing through the by-pass circuit (31).

3. Apparatus as in claim 1 or 2, **characterized in that** said condenser (21) comprises a cooling device (42) provided to cool the coolant in transit in said condenser (21), **and in that** a regulation member (43) is associated with said cooling device (42) and is configured to continuously regulate the cooling entity of said coolant fluid.

4. Apparatus as in claim 3, **characterized in that** said cooling device (42) comprises a ventilation device (25) and said regulation member (43) comprises devices to regulate the speed (27) associated with an electric motor (26) to drive said ventilation device (25).

5. Apparatus as in claim 3, **characterized in that** said cooling device (42) comprises a heat exchanger (44) and said regulation member (43) comprises a regulation valve (46) configured to regulate the flow rate of a condensation fluid through said heat exchanger (44).

6. Method to dehumidify a fluid to be dehumidified that comprises:
- feeding said fluid to be dehumidified into a heat exchanger (11);
- circulating a coolant in a coolant heat exchange circuit (13) during which said coolant is compressed by a compressor (20), condensed by a condenser (21) and expanded by an expansion member (22);
- feeding said coolant into said heat exchanger (11) to cool said fluid by means of heat exchange;
- regulating the actuation speed of said compressor (20) between a value of minimum speed, greater than zero, and a value of maximum speed, said actuation speed being chosen as a function of the thermal load present in said heat exchanger (11) and to prevent the formation of ice in the latter,
**characterized in that** if the actuation speed of said compressor (20) corresponds with said minimum actuation speed, the method provides to detect at least one functioning parameter of said fluid or said coolant, **in that** if said at least one functioning parameter reaches a limit threshold value, indicating a further reduction in the thermal load, the method provides to switch off said compressor (20), **and in that** when the switching-off of said compressor (20) is commanded, the separation is also defined of the coolant heat exchange circuit (13) in a first branch (50) of the circuit, in which part of the coolant remains confined between the compressor (20) and the condenser (21), and in a second branch (51) of the circuit in which the remaining part of the coolant remains confined in the heat exchanger (11).

7. Method as in claim 6, **characterized in that** said functioning parameters are chosen from at least one of either pressure, temperature or flow rate of said coolant or said fluid, or humidity of said fluid.

8. Method as in claim 6 or 7, **characterized in that** the detection of functioning parameters provides to detect the temperature of said coolant entering said heat exchanger (11).

9. Method as in claim 8, **characterized in that** the switching-off of said compressor (20) is commanded if the temperature of said coolant entering said heat exchanger (11) is less than or equal to 1°C.

10. Method as in any claim from 6 to 9, **characterized in that** the evaluation of the thermal load present in said heat exchanger (11) is determined by detecting at least one of either the pressure of the coolant exiting from said heat exchanger (11), the pressure of the coolant entering the condenser (21), or the temperature of the coolant entering into the heat exchanger (11).

11. Method as in any claim from 6 to 10, **characterized in that** after the switching-off of said compressor (20), the detection is provided of functioning parameters indicating an increase in the thermal load in said heat exchanger (11), **and in that** if said functioning parameters exceed a determinate threshold, the method provides to re-start said compressor (20).

## Patentansprüche

1. Vorrichtung zum Entfeuchten eines zu entfeuchtenden Fluids, umfassend einen Wärmetauscher (11), der mit einem Luft-Wärmetauschkreislauf (12) und einem Kühlmittel-Wärmetauschkreislauf (13) in Verbindung steht und so ausgelegt ist, dem Wärmetauscher (11) das Fluid bzw. ein Kühlmittel zuzuführen, wobei der Kühlmittel-Wärmetauschkreis (13) mit einem Verdichter (20), einem Kondensator (21) und einem Expansionselement (22) versehen ist, die miteinander in Serie geschaltet und mit dem Wärmetauscher (11) verbunden sind, wobei ein Antriebselement (23) mit dem Verdichter (20) verbunden ist und eine Einrichtung zur Regelung der Drehzahl (24) mit dem Antriebselement (23) verbunden ist und ausgelegt ist, die Antriebsdrehzahl des Verdichters (20) zu regeln, die Vorrichtung umfassend eine Befehls- und Steuereinheit (41), die mit der Einrichtung zur Regelung der Drehzahl (24) und mit der Erkennungseinrichtungen verbunden ist, die vorgesehen sind, um die thermische Belastung des Wärmetauschers (11) zu erkennen,
**dadurch gekennzeichnet dass**, wenn die Betätigungsdrehzahl des Verdichters (20) die Mindestdrehzahl erreicht, die Befehls- und Steuereinheit (41) ausgelegt ist, mithilfe der Erkennungseinrichtungen mindestens einen Funktionsparameter des Fluids oder des Kühlmittels zu erkennen, dadurch, dass, wenn der mindestens eine Funktionsparameter einen Grenzschwellenwert erreicht, der eine weitere Verringerung der thermischen Belastung angibt, die Befehls- und Steuereinheit (41) ausgelegt ist, den Verdichter (20) auszuschalten, dadurch, dass der Kühlmittel-Wärmetauschkreislauf (13) mit einem Rückschlagventil (29) versehen ist, das zwischen dem Ausgang des Wärmetauschers (11) und der Ansaugung des Verdichters (20) angeordnet ist und ausgelegt ist, einen Rückstrom des Kühlmittels von dem Verdichter (20) hin zu dem Wärmetauscher (11) zu verhindern, zumindest wenn der Verdichter (20) ausgeschaltet ist, und dadurch, dass das Expansionselement (22) ausgelegt ist, den Durchfluss selektiv zu unterbrechen, zumindest wenn der Verdichter (20) ausgeschaltet ist.

2. Vorrichtung nach Anspruch 1, **dadurch gekennzeichnet, dass** der Kühlmittel-Wärmetauschkreislauf (13) einen Umgehungskreislauf (31) umfasst, der zwischen der Abgabe und der Ansaugung des Verdichters (20) geschaltet ist und mit einem Regelungselement (32) versehen ist, das mit der Befehls- und Steuereinheit (41) verbunden ist und in der Lage ist, selektiv gesteuert zu werden, um die Strömungsrate des Kühlmittels, das den Umgehungskreislauf (31) durchläuft, zu regeln oder zu unterbrechen.

3. Vorrichtung nach Anspruch 1 oder 2, **dadurch gekennzeichnet, dass** der Kondensator (21) eine Kühlvorrichtung (42) umfasst, die vorgesehen ist, um das Kühlmittel zu kühlen, das in dem Kondensator (21) strömt, und dadurch, dass ein Regelungselement (43) mit der Kühlvorrichtung (42) in Verbindung steht und ausgelegt ist, die Kühleinheit des Kühlfluids fortlaufend zu regeln.

4. Vorrichtung nach Anspruch 3, **dadurch gekennzeichnet, dass** die Kühlvorrichtung (42) eine Belüftungsvorrichtung (25) umfasst und das Regelungselement (43) Einrichtungen umfasst, um die Drehzahl (27) zu regeln, die mit einem Elektromotor (26) verbunden ist, um die Belüftungsvorrichtung (25) anzutreiben.

5. Vorrichtung nach Anspruch 3, **dadurch gekennzeichnet, dass** die Kühlvorrichtung (42) einen Wärmetauscher (44) umfasst und das Regelungselement (43) ein Regelventil (46) umfasst, das ausgelegt ist, die Strömungsrate eines Kondensationsfluids durch den Wärmetauscher (44) zu regeln.

6. Verfahren zum Entfeuchten eines zu entfeuchtenden Fluids, das Folgendes umfasst:
- Zuführen des zu entfeuchtenden Fluids in einen Wärmetauscher (11);
- Umwälzen eines Kühlmittels in einem Kühlmittel-Wärmetauschkreislauf (13), während dem das Kühlmittel von einem Verdichter (20) verdichtet, von einem Kondensator (21) kondensiert und von einem Expansionselement (22) expandiert wird;
- Zuführen des Kühlmittels in den Wärmetauscher (11), um das Fluid mittels Wärmeaustausch zu kühlen;
- Regeln der Betätigungsdrehzahl des Verdichters (20) zwischen einem Wert der Mindestdrehzahl, der größer als Null ist, und einem Wert der Maximaldrehzahl, wobei die Betätigungsdrehzahl je nach der thermischen Belastung gewählt wird, die in dem Wärmetauscher (11) vorliegt, und um die Bildung von Eis in Letzterem zu verhindern,
**dadurch gekennzeichnet, dass** wenn die Betätigungsdrehzahl des Verdichters (20) der Mindest-Betätigungsdrehzahl entspricht, das Verfahren vorsieht, mindestens einen Funktionsparameter des Fluids oder des Kühlmittels zu erkennen, dadurch, dass, wenn mindestens ein Funktionsparameter einen Grenzschwellenwert erreicht, der eine weitere Verringerung der thermischen Belastung angibt, das Verfahren vorsieht, den Verdichter (20) auszuschalten, und dadurch, dass, wenn das Ausschalten des Verdichters (20) befohlen wird, auch die Trennung des Kühlmittel-Wärmetauschkreislaufes (13) in einen ersten Zweig (50) des Kreislaufs, in dem ein Teil des Kühlmittels zwischen dem Verdichter (20) und dem Kondensator (21) eingeschlossen bleibt, und einen zweiten Zweig (51) des Kreislaufs, in dem der übrige Teil des Kühlmittels in dem Wärmetauscher (11) eingeschlossen bleibt, definiert wird.

7. Verfahren nach Anspruch 6, **dadurch gekennzeichnet, dass** die Funktionsparameter aus mindestens einem von entweder dem Druck, der Temperatur oder der Strömungsrate des Kühlmittels oder Fluids, oder der Feuchte des Fluids, gewählt werden.

8. Verfahren nach Anspruch 6 oder 7, **dadurch gekennzeichnet, dass** die Erkennung von Funktionsparametern vorsieht, die Temperatur des Kühlmittels, das in den Wärmetauscher (11) eintritt, zu erkennen.

9. Verfahren nach Anspruch 8, **dadurch gekennzeichnet, dass** das Ausschalten des Verdichters (20) befohlen wird, wenn die Temperatur des Kühlmittels, das in den Wärmetauscher (11) eintritt, kleiner oder gleich 1 °C ist.

10. Verfahren nach einem der Ansprüche 6 bis 9, **dadurch gekennzeichnet, dass** die Prüfung der thermischen Belastung, die in dem Wärmetauscher (11) vorliegt, bestimmt wird, indem mindestens eins von entweder dem Druck des Kühlmittels, das aus dem Wärmetauscher (11) austritt, dem Druck des Kühlmittels, das in den Kondensator (21) eintritt, oder der Temperatur des Kühlmittels, das in den Wärmetauscher (11) eintritt, erkannt wird.

11. Verfahren nach einem der Ansprüche 6 bis 10, **dadurch gekennzeichnet, dass** nach dem Ausschalten des Verdichters (20) die Erkennung von Funktionsparametern vorgesehen ist, die einen Anstieg der thermischen Belastung in dem Wärmetauscher (11) angeben, und dadurch, dass, wenn die Funktionsparameter eine bestimmte Schwelle überschreiten, das Verfahren vorsieht, den Verdichter (20) neu zu starten.

## Revendications

1. Appareil pour la déshumidification d'un fluide à déshumidifier comprenant un échangeur de chaleur (11) associé à un circuit d'échange thermique d'air (12) et un circuit d'échange thermique de réfrigérant (13) et conçu pour alimenter audit échangeur de chaleur (11) respectivement ledit fluide et un réfrigérant, ledit circuit d'échange thermique de réfrigérant (13) étant pourvu d'un compresseur (20), d'un condenseur (21) et d'un élément d'expansion (22), qui sont reliés les uns aux autres et audit échangeur de chaleur (11), un élément d'entraînement (23) étant relié audit compresseur (20) et un dispositif régulateur de vitesse (24) étant relié audit élément d'entraînement (23), et étant conçu pour réguler la vitesse d'entraînement dudit compresseur (20), ledit appareil comprenant une unité de commande et de contrôle (41) reliée audit dispositif régulateur de vitesse (24), et à des dispositifs de détection conçus pour régler la charge thermique dudit échangeur de chaleur (11),
**caractérisé en ce que,** si la vitesse d'actionnement dudit compresseur (20) atteint la vitesse minimale, ladite unité de commande et de contrôle (41) est conçue pour détecter, au moyen desdits dispositifs de détection, au moins un paramètre de fonctionnement dudit fluide ou dudit réfrigérant, **en ce que** si ledit au moins un paramètre de fonctionnement atteint une valeur de seuil limite, indiquant une réduction ultérieure de la charge thermique, ladite unité de commande et de contrôle (41) est conçue pour désactiver ledit compresseur (20), **en ce que** ledit circuit d'échange thermique de réfrigérant (13) est pourvu d'une soupape de non-retour (29) interposée entre la sortie dudit échangeur de chaleur (11) et l'aspiration dudit compresseur (20) et conçue pour empêcher un retour du réfrigérant du compresseur (20) vers ledit échangeur de chaleur (11) au moins lorsque ledit compresseur (20) est désactivé, et **en ce que** ledit élément d'expansion (22) est conçu pour intercepter sélectivement l'écoulement circulant au moins lorsque ledit compresseur (20) est désactivé.

2. Appareil selon la revendication 1, **caractérisé en ce que** ledit circuit d'échange thermique de réfrigérant (13) comprend un circuit de dérivation (31) relié entre le refoulement et l'aspiration du compresseur (20) et pourvu d'un élément de réglage (32) relié à ladite unité de commande et de contrôle (41) et pouvant être commandé sélectivement pour régler ou intercepter le débit de réfrigérant circulant dans le circuit de dérivation (31).

3. Appareil selon la revendication 1 ou 2, **caractérisé en ce que** ledit condenseur (21) comprend un dispositif réfrigérateur (42) apte à refroidir le réfrigérant circulant dans ledit condenseur (21) et **en ce qu'**un élément de régulation (43) est associé audit dispositif réfrigérateur (42) et conçu pour réguler en continu l'entité de refroidissement dudit fluide réfrigérant.

4. Appareil selon la revendication 3, **caractérisé en ce que** ledit dispositif réfrigérateur (42) comprend un dispositif de ventilation (25) et ledit élément de régulation (43) comprend des dispositifs de régulation de la vitesse (27) associés à un moteur électrique (26) pour l'entraînement dudit dispositif de ventilation (25).

5. Appareil selon la revendication 3, **caractérisé en ce que** ledit dispositif réfrigérateur (42) comprend un échangeur de chaleur (44) et ledit élément de régulation (43) comprend une soupape de réglage (46) conçue pour régler le débit d'un fluide de condensation circulant dans ledit échangeur de chaleur (44).

6. Procédé de déshumidification d'un fluide à déshumidifier, comprenant les étapes consistant à :
- alimenter ledit fluide à déshumidifier dans un échangeur de chaleur (11) ;
- faire circuler un réfrigérant dans un circuit d'échange thermique de réfrigérant (13), ledit réfrigérant étant en même temps comprimé par un compresseur (20), condensé par un condenseur (21) et expansé par un élément d'expansion (22) ;
- alimenter ledit réfrigérant dans ledit échangeur de chaleur (11) pour refroidir ledit fluide par échange thermique ;
- réguler la vitesse d'actionnement dudit compresseur (20) entre une valeur de vitesse minimale, supérieur à zéro et une valeur de vitesse maximale, ladite vitesse d'actionnement étant choisie en fonction de la charge thermique dans ledit échangeur de chaleur (11) et pour empêcher la formation de glace dans celui-ci,
**caractérisé en ce que,** si la vitesse d'actionnement dudit compresseur (20) correspond à ladite la vitesse d'actionnement minimale, le procédé comporte l'étape consistant à détecter au moins un paramètre de fonctionnement dudit fluide ou dudit réfrigérant, **en ce que** si ledit au moins un paramètre de fonctionnement atteint une valeur de seuil limite, indiquant une réduction ultérieure de la charge thermique, le procédé comporte l'étape consistant à désactiver ledit compresseur (20), et **en ce que** lorsque ledit compresseur (20) est commandé pour de désactiver, la séparation du circuit d'échange thermique de réfrigérant (13) est aussi définie entre une première branche (50) du circuit, dans laquelle une partie du réfrigérant reste confinée entre le compresseur (20) et le condenseur (21), et une seconde branche (51) du circuit, dans laquelle le reste du réfrigérant reste confiné dans l'échangeur de chaleur (11).

7. Procédé selon la revendication 6, **caractérisé en ce que** lesdits paramètres de fonctionnement sont choisis dans le groupe consistant d'au moins un parmi pression, température ou débit dudit réfrigérant ou dudit fluide, ou humidité dudit fluide.

8. Procédé selon la revendication 6 ou 7, **caractérisé en ce que** la détection de paramètres de fonctionnement permet de détecter la température dudit réfrigérant en entrée dans ledit échangeur de chaleur (11).

9. Procédé selon la revendication 8, **caractérisé en ce que** la désactivation dudit compresseur (20) est commandée si la température dudit réfrigérant en entrée dans ledit échangeur de chaleur (11) est inférieure ou égale à 1°C.

10. Procédé selon n'importe laquelle des revendications 6 à 9, **caractérisé en ce que** l'évaluation de la charge thermique dans ledit échangeur de chaleur (11) est déterminée par la détection d'au moins une parmi la pression du réfrigérant sortant dudit échangeur de chaleur (11), la pression du réfrigérant en entrée dans le condenseur (21), ou la température du réfrigérant en entrée dans l'échangeur de chaleur (11).

11. Procédé selon n'importe laquelle des revendications 6 à 10, **caractérisé en ce qu'**après la désactivation dudit compresseur (20), des paramètres de fonctionnement sont détectés, indiquant une augmentation de la charge thermique dans ledit échangeur de chaleur (11), et **en ce que** si lesdits paramètres de fonctionnement dépassent un seuil déterminé, le procédé comporte l'étape consistant à redémarrer ledit compresseur (20).
